# EUROPEAN PATENT APPLICATION

(11) **EP 2 833 085 A1**
(43) Date of publication of application: **04.02.2015**
(21) Application number: 13769407.1
(22) Date of filing: 29.03.2013
(51) Int. Cl.: F25B 21/00, H01F 1/00

(54) **MATERIAL FOR MAGNETIC REFRIGERATION AND MAGNETICALLY REFRIGERATING DEVICE**

(30) Priority: 30.03.2012 JP 2012081722
(71) Applicant: Kabushiki Kaisha Toshiba, Minato-ku Tokyo 105-8001 (JP)
(72) Inventor: SAITO, Akiko, Tokyo 105-8001 (JP); TOMIMATSU, Norihiro, Tokyo 105-8001 (JP); KOBAYASHI, Tadahiko, Tokyo 105-8001 (JP); KAJI, Shiori, Tokyo 105-8001 (JP); YAGI, Ryosuke, Tokyo 105-8001 (JP)
(74) Representative: Hoffmann Eitle
(86) International application number: PCT/JP2013/059571
(87) International publication number: WO 2013/147177

(57) **Abstract**

A composite material (130) for magnetic refrigeration is provided. The composite material (130) for magnetic refrigeration includes a magnetocaloric effect material (120) having a magnetocaloric effect; and a heat conductive material (160) dispersed in the magnetocaloric effect material. The heat conductive material (160) is at least one selected from the group consisting of a carbon nanotube and a carbon nanofiber.

## Description

### Technical Field

Embodiments of the present invention relate generally to a material for magnetic refrigeration and a magnetic refrigeration device.

### Background

Examples of refrigeration technologies in a room temperature region, which closely relate to a human daily life, include a household refrigerator, a freezer, and a room air conditioning system. A gas compression/expansion cycle is applied in such refrigeration technologies. However, the refrigeration technologies have serious problems of effects of a gas refrigerant on the environment; ozone layer depletion due to a specific freon gas discharged into the environment; and effects of an alternative freon gas discharged into the environment on global warming. Then, alternate of the refrigerants to natural gaseous refrigerants (CO₂, ammonia, and isobutene or the like) is also advanced. Present day, a safe, effective, and novel refrigeration technology friendly with the environment is required.

In recent years, magnetic refrigeration technology has been expected to be a candidate for environmentally friendly refrigeration technologies having a high efficiency. Research and development of magnetic refrigeration technologies near room temperature are actively conducted. When a magnetic field is applied to a magnetic material, and the magnitude of the applied magnetic field is changed in an adiabatic state, the temperature of the magnetic material is changed. This phenomenon is referred to as a magnetocaloric effect. A magnetic refrigeration cycle is based on the magnetocaloric effect.

That is, when a magnetic field generation unit is arranged outside a magnetic refrigerant, and a material is subjected to magnetization or demagnetization by the magnetic field generation unit, hot heat and cold heat are generated by the magnetocaloric effect. Refrigeration is performed by carrying the cold heat to a cooled part and carrying the hot heat to a exhaust heat part. When a solid is brought into contact with a magnetic refrigerant of which the temperature is changed to a cold temperature state or a high temperature state, heat (cold heat or hot heat) can be taken out to the outside. Alternatively, a liquid and a gas are brought into contact with the magnetic refrigerant to thereby transfer heat, and to make the liquid and the gas flow. Therefore, the heat (cold heat or hot heat) can be taken out to the outside.

In order to enhance the heat exchange efficiency, it is effective to enlarge a contact area of the magnetic refrigerant and solid, or to smooth a contact surface. When a fluid such as a liquid or a gas is used to transfer of the heat, it is effective to enlarge the specific surface area of the magnetic refrigerant brought into contact with the fluid. Particularly, when the fluid is used to transfer of the heat, the magnetic refrigerant having form such as a plate form, particle form, mesh form or porous body form is used and a container is filled with such a magnetic refrigerant. The size of the specific surface area of the magnetic refrigerant brought into contact with the fluid can be changed by changing the plate thickness and particle diameter of the magnetic refrigerant, and the wire diameter of a mesh, a mesh density, and the pore size and hole density of a porous body, or the like.

An AMR (Active Magnetic Regenerative Refrigeration) cycle is known as a useful refrigerating method in magnetic refrigeration for a room temperature region. In the AMR cycle, a heat exchange container is filled with a magnetic refrigerant having form such as a plate form, particle form, mesh form, or porous body form so that voids as a flow passage of the fluid are secured. The voids in the heat exchange container are filled with the fluid. The fluid can flow into/out of the container through ports provided in both the ends of the container. A mechanism configured to make the fluid flow and a mechanism configured to apply/remove a magnetic field to/from the heat exchange container are provided outside the heat exchange container. The container structure described above and including the magnetic refrigerant where the magnetic field is applied/removed and the heat is transported is referred to as an AMR bed (magnetic refrigeration working chamber).

The AMR cycle includes the following four steps: (I) applying a magnetic field to an AMR bed; (II) making a heat transport fluid flow from one end of the AMR bed to the other end to transport hot heat; (III) removing the magnetic field from the AMR bed; and (IV) making the heat transport fluid flow from one end of the AMR bed to the other end (in a direction opposite to refrigerant movement in the step (II)) to transport cold heat. That is, in the heat cycle of (I) to (IV), the temperature of the magnetic refrigerant is increased with the application of the magnetic field in the AMR bed. Next, heat is exchanged between the magnetic refrigerant and the heat transport fluid, and the heat transport fluid moves in a forward direction to thereby exchange the heat between the heat transport fluid and the magnetic refrigerant. Then, when the magnetic field is removed, the temperature of the magnetic refrigerant is decreased. Subsequently, the heat is exchanged between the magnetic refrigerant and the heat transport fluid, and the heat transport fluid moves in an opposite direction to thereby exchange the heat between the heat transport fluid and the magnetic refrigerant.

When the heat cycle including the four steps is repeated, hot heat and cold heat are generated according to the magnetocaloric effect in the magnetic refrigerant. The hot heat and the cold heat are transported in directions opposite to each other through the heat transport fluid, and sequentially stored in the magnetic refrigerant itself. As a result, a temperature gradient is generated in a heat flow direction. A large temperature difference is generated between both the ends of the AMR bed in a steady state.

Since a refrigeration capacity largely depends on the number of refrigeration cycles per unit time (frequency), an improvement in the refrigeration capacity can be expected when the frequency is increased. However, when the frequency is too high, heat conduction in the magnetic refrigerant is not sufficiently performed. Rather, this leads to a decrease in the refrigeration capacity. In the step in which the heat generated by the magnetocaloric effect is taken out to the outside through the heat transport fluid, the heat moves as follows. After the heat generated in the magnetic refrigerant is transferred to the surface of the magnetic refrigerant, the heat is transferred to the heat transport fluid from the magnetic refrigerant on the surface thereof. When the heat transport fluid moves, the heat is carried to the outside. Thus, the heat conduction in the magnetic refrigerant, and the heat transfer between the magnetic refrigerant and the fluid on the surface of the magnetic refrigerant contribute to the removing efficiency of the heat.

In the heat transfer between the magnetic refrigerant and the fluid, the heat-exchange efficiency can be enhanced by changing the form and size of the magnetic refrigerant to enlarge the specific surface area of the refrigerant brought into contact with the fluid. The heat conduction in the magnetic refrigerant is controlled by the thermal conductivity of the material itself. When the frequency of the refrigeration cycle is increased and the time of each cycle step is shortened, the hot heat and cold heat generated in the magnetic refrigerant are not sufficiently transferred to the surface of the magnetic refrigerant within a cycle. As a result, the heat cannot be taken out to the outside from the magnetic refrigerant, which leads to the decrease in the refrigeration capacity.

When the size of the magnetic refrigerant is decreased or the magnetic refrigerant is thinned to decrease a distance between the central part of the magnetic refrigerant and the surface thereof, a time for which the heat generated in the central part is transferred to the surface can be shortened. Thereby, the heat can also be sufficiently transferred from the inner part of the magnetic refrigerant to the surface thereof within the time of the refrigeration cycle step. For example, when the form of the magnetic refrigerant is a spherical particle, the particle size (particle diameter) is decreased, and thereby the specific surface area of the magnetic refrigerant can be enlarged, and the distance between the central part of the magnetic refrigerant and the surface thereof can be decreased. Thereby, the heat conduction in the magnetic refrigerant is improved. In addition, the heat transfer between the magnetic refrigerant and the fluid is also advantageously improved.

From the viewpoint of the heat exchange, the decrease in the particle size of the magnetic refrigerant is effective in an increase in the frequency. The decrease in the particle diameter improves heat exchange efficiency, and is advantageous to an improvement in a refrigeration performance.

However, since the heat transport fluid flows through the voids of the magnetic refrigerant with which the container is filled, the sizes of the voids are also decreased when the spherical particle diameter of the magnetic refrigerant is decreased. Then, the pressure loss of the fluid is increased, which leads to a decrease in the refrigeration capacity. Not only the improvement in the refrigeration performance but also the decrease in the refrigeration performance are caused by decreasing the particle diameter. The improvement in the refrigeration performance and the decrease in the refrigeration performance are in trade-off relationship. Therefore, the decreased particle diameter of the magnetic refrigerant cannot necessarily comply with the increase in the frequency of the magnetic refrigeration cycle sufficiently.

When the magnetic refrigerant has a plate form, the sizes of voids (gaps) between plates can be freely designed independently of the thickness of the plate. The pressure loss of the fluid when the form of the magnetic refrigerant is the plate form is easily suppressed low as compared with that in the case of the spherical particle. From the viewpoint of the pressure loss, the magnetic refrigerant having plate form is suited for the increase in the frequency. When a plate having a thickness comparable as the diameter of the spherical particle is used as the magnetic refrigerant, the specific surface area of the magnetic refrigerant is much smaller than that in the case of the spherical particle. For this reason, in order to achieve the heat exchange at a particularly high frequency, it is desirable to decrease the thickness of the plate of the magnetic refrigerant and to enhance a filling rate to narrow the void (gap) sizes between the adjacent plates.

However, as the void sizes between the plates are narrowed, the pressure loss is increased. Furthermore, when both the plate thickness and the void size are decreased, the thin magnetic refrigerant having a plate form receives a magnetic attractive force when the magnetic field is applied/removed. This causes the deformation of the magnetic refrigerant, which may increase the blockage of the voids. Therefore, the decreased plate thickness of the magnetic refrigerant cannot necessarily comply with the increase in the frequency of the magnetic refrigeration cycle sufficiently.

Thus, when flow passage blockade caused by mechanical deformation is intended to be prevented while the increase in the pressure loss is avoided, it is not preferable that the size of the magnetic refrigerant is decreased to a prescribed value or less. In order to comply with the increase in the frequency of the magnetic refrigeration cycle, the thermal conductivity in the magnetic refrigerant is desirably high.

A magnetic material such as Gd and an alloy thereof and a LaFeSi-based material draw attention as the magnetic refrigerant in the room temperature region. These materials have a thermal conductivity of about 10 W/m·K. These magnetic materials have a thermal conductivity which is one order of magnitude less than that of a high heat conduction metal such as Cu and Al. In the present circumstances, a material having a high magnetocaloric effect in the room temperature region and having a thermal conductivity of several tens W/m·K has not yet been obtained.

### Citation List

### Patent Literature

Patent Literature 1: U.S. Patent No. 4332135

### Summary of Invention

### Technical Problem

It is an object of the present invention to provide a composite material for magnetic refrigeration having high thermal conductivity and a practicable magnetocaloric effect.

### Solution to Problem

A composite material for magnetic refrigeration according to an embodiment contains: a magnetocaloric effect material having a magnetocaloric effect; and a heat conductive material dispersed in the magnetocaloric effect material. The heat conductive material is at least one selected from the group consisting of a carbon nanotube and a carbon nanofiber.

### Advantageous Effects of Invention

An embodiment of the present invention provides a composite material for magnetic refrigeration having high thermal conductivity and a practicable magnetocaloric effect.

### Brief Description of Drawings

FIG. 1 is a typical view showing a main configuration of a magnetic refrigeration device according to one embodiment.
FIG. 2A is a typical view describing removal of a magnetic field from an AMR bed.
FIG. 2B is a typical view describing application of a magnetic field to an AMR bed.
FIG. 3 is a typical view showing a composite material for magnetic refrigeration according to one embodiment.
FIG. 4A is a typical view showing a composite material for magnetic refrigeration according to another embodiment.
FIG. 4B is a partial enlarged view of the composite material for magnetic refrigeration shown in FIG. 4A.
FIG. 5A is a typical view showing a constitution of a composite material for magnetic refrigeration.
FIG. 5B is a typical view showing a constitution of a composite material for magnetic refrigeration.
FIG. 6A is a typical view showing a composite material for magnetic refrigeration according to another embodiment.
FIG. 6B is a typical view showing a composite material for magnetic refrigeration according to another embodiment.
FIG. 7 is a typical cross-sectional view showing an example of an AMR bed in a magnetic refrigeration device according to one embodiment.
FIG. 8 is a typical cross-sectional view showing another example of an AMR bed in a magnetic refrigeration device according to one embodiment.
FIG. 9 is a typical cross-sectional view showing another example of an AMR bed in a magnetic refrigeration device according to one embodiment.
FIG. 10 is a typical cross-sectional view showing another AMR bed in a magnetic refrigeration device according to one embodiment.
FIG. 11 is a graph showing the relationship between a content of a heat conductive material and a ratio of a temperature change.

### Description of Embodiments

Hereinafter, an embodiment will be schematically described with reference to the drawings.

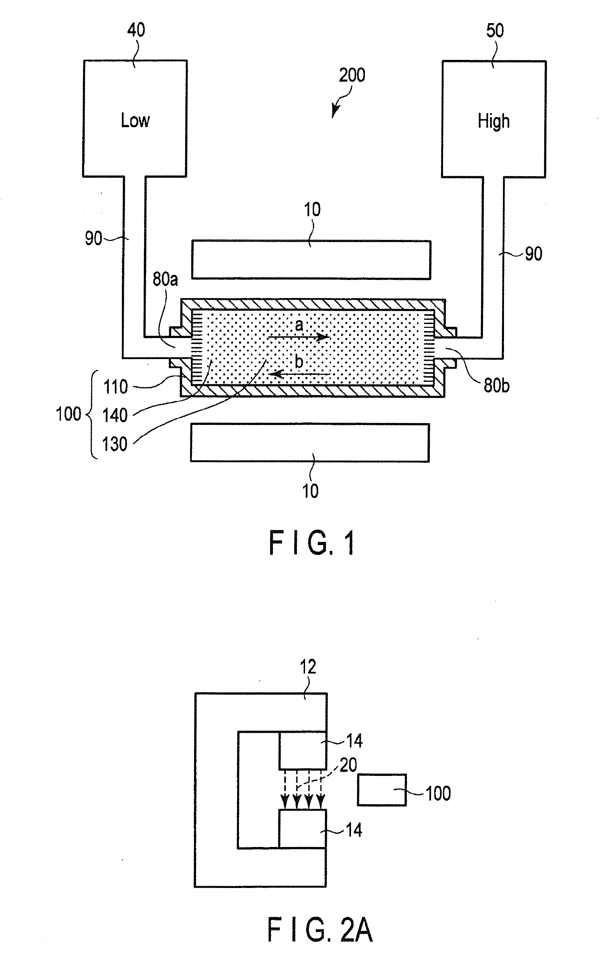

FIG. 1 is a typical view showing a main configuration of a magnetic refrigeration device according to one embodiment. A magnetic refrigeration device 200 shown in FIG. 1 includes an AMR bed 100, a magnetic field generation unit 10 provided outside the AMR bed 100, a low temperature side heat exchange container 40 connected to the AMR bed 100 through a connecting pipe 90, and a high temperature side heat exchange container 50 connected to the AMR bed 100 through a connecting pipe 90.

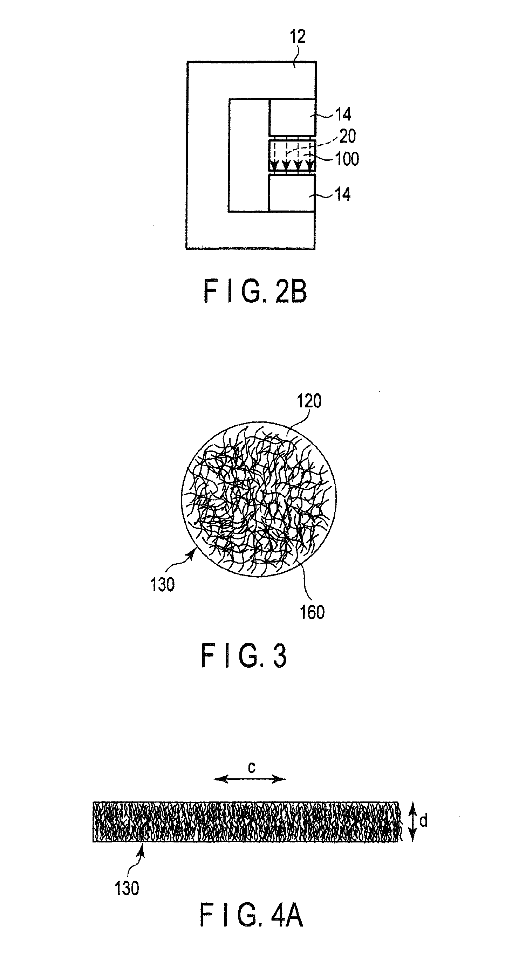

The magnetic field generation unit 10 can include a magnetic yoke 12 and a pair of opposed permanent magnets 14 as shown in FIG. 2A, for example. The magnetic field generation unit 10 generates a magnetic field 20 in a space between the pair of permanent magnets 14. As shown in FIG. 2B, the AMR bed 100 is arranged in the magnetic field 20 to apply the magnetic field to the AMR bed 100. A state where the magnetic field is removed is shown in FIG. 2A. The magnetic field generation unit 10 is not limited to a C type magnetic circuit shown in FIGS. 2A and 2B. A Halbach type magnetic circuit, an electromagnet, and a superconducting magnet can also be used as the magnetic field generation unit 10.

The AMR bed 100 includes a container 110. A composite material 130 for magnetic refrigeration of the present embodiment is accommodated in the container 110. A heat transport fluid 140 flows in the container 110. The container 110 may have a cylinder shape, for example. However, the shape of the container 110 is not limited thereto. The container 110 may have an optional shape such as a rectangular parallelepiped shape. The container 110 is preferably made of a material having low thermal conductivity since the container 110 is required to maintain a temperature gradient generated in the container 110 and to suppress heat exchange with the outside low. Examples of the material include a low thermal conductivity resin. However, optional materials may be used without particular limitation.

For example, as shown in FIG. 3, the composite material 130 for magnetic refrigeration contains a magnetocaloric effect material 120 and a heat conductive material 160 dispersed in the magnetocaloric effect material 120 and selected from a carbon nanotube and a carbon nanofiber. The constitution thereof will be described in detail later.

Examples of the heat transport fluid 140 include water, antifreeze liquid, an ethanol solution, and a mixture thereof. The heat transport fluid 140 can flow into/out of the container 110 through ports 80a and 80b provided in both ends of the AMR bed 100. Cold heat and hot heat generated in the composite material 130 for magnetic refrigeration are heat-exchanged with the heat transport fluid 140. Then, the flow of the heat transport fluid 140 can transport the cold heat to the low temperature side heat exchange container 40 connected to the AMR bed 100, and transport the hot heat to the high temperature side heat exchange container 50.

Although not illustrated in the drawings, the magnetic refrigeration device 200 includes a drive mechanism configured to change a relative position between the magnetic field generation unit 10 and the AMR bed 100, and a heat transport unit configured to transport the cold heat and hot heat generated in the AMR bed 100 to a predetermined heat exchange container (40 or 50). As shown in FIG. 2A and 2B, the relative position between the magnetic field generation unit 10 and the AMR bed 100 is changed by the drive mechanism to thereby attain the application/removal of the magnetic field to/from the AMR bed 100. The magnetic field generation unit 10 or the AMR bed 100 may be moved by driving. The heat transport unit transports the cold heat generated in the AMR bed 100 to the low temperature side heat exchange container 40, and transports the hot heat generated in the AMR bed 100 to the high temperature side heat exchange container 50.

The heat transport unit includes the heat transport fluid 140 and a mechanism configured to make the heat transport fluid flow. For example, the mechanism configured to make the heat transport fluid 140 flow includes a refrigerant pump configured to make flow of a fluid for heat transport, and a switch unit configured to switch the flow direction of the fluid for heat transport. Alternatively, a piston mechanism can also be used as the mechanism configured to make the heat transport fluid 140 flow. The heat transport fluid 140 flows from the port 80a positioned on the low temperature side heat exchanger 40 side to the port 80b positioned on the high temperature side heat exchanger 50 side in the AMR bed 100 in an AMR cycle. Alternatively, to the contrary, the heat transport fluid 140 flows from the port 80b positioned on the high temperature side heat exchanger 50 side to the port 80a positioned on the low temperature side heat exchanger 40 side in the AMR bed 100.

One AMR bed 100 is shown in the magnetic refrigeration device 200 shown in FIG. 1. However, the number of the AMR beds 100 may be plural. The plurality of AMR beds 100 may be arranged in parallel or in series. The magnetic field generation unit 10 is provided so as to efficiently apply/remove the magnetic field to/from the plurality of AMR beds 100. The number and arrangement of the magnetic field generation units 10 are not particularly limited.

When the magnetic refrigeration device of the present embodiment is operated, the magnetic field is first applied to the AMR bed 100 by bringing the magnetic field generation unit 10 close to the AMR bed 100, as shown in FIG. 2B. Thereby, the magnetocaloric effect material 120 contained in the composite material 130 for magnetic refrigeration generates hot heat. That is, the hot heat is generated in the magnetocaloric effect material 120. The hot heat generated therein is transferred to a network constructed by the heat conductive material 160, and moves to the surface of the composite material 130 through the network. Since voids in the AMR bed 100 are filled with the heat transport fluid 140, the hot heat is heat-exchanged with the heat transport fluid 140 on (at) the surface of the composite material 130 for magnetic refrigeration.

The heat transport fluid 140 receiving the hot heat from the composite material 130 for magnetic refrigeration flows in a forward direction represented by an arrow a, and transports the hot heat in the forward direction. Sequentially, when the magnetic field generation unit 10 is moved to a position which is distanced from the AMR bed 100 as shown in FIG. 2A, the magnetic field applied to the AMR bed 100 is decreased. In some cases, the magnetic field applied to the AMR bed 100 is removed. As a result, the temperature of the magnetocaloric effect material 120 contained in the composite material 130 for magnetic refrigeration is decreased. That is, the cold heat is generated in the magnetocaloric effect material 120.

The cold heat is transferred to the network constructed by the heat conductive material 160 having a high thermal conductivity, and moves to the surface of the composite material 130 through the network. Since voids in the AMR bed 100 are filled with the heat transport fluid 140, the cold heat is heat-exchanged with the heat transport fluid 140 on (at) the surface of the composite material 130 for magnetic refrigeration. That is, contrary to the case of the generation of hot heat, heat is removed from the heat transport fluid 140 on (at) the surface of the composite material 130 for magnetic refrigeration. The magnetocaloric effect material 120 absorbs the heat absorbed by the composite material 130 for magnetic refrigeration through the network constructed by the heat conductive material 160 having a high thermal conductivity.

The heat transport fluid 140 receiving the cold heat from the composite material 130 for magnetic refrigeration flows in an opposite direction represented by an arrow b, and transports the cold heat in the opposite direction. When a heat cycle including the step is repeated, the hot heat generated in the magnetocaloric effect material 120 is transported to the high temperature side heat exchanger 50, and the cold heat is transported to the low temperature side heat exchanger 40. That is, the hot heat and the cold heat are transported in directions opposite to each other through the heat transport fluid 140. The magnetocaloric effect material 120 stores the heat. Thereby, the temperature gradient is generated in the AMR bed 100. Furthermore, the generated hot heat is transported to the high temperature side heat exchange container 50, and released to the outside. The generated cold heat is transferred to the low temperature side heat exchange container 40, and cools a cooled part. Thus, the cold heat is obtained from the low temperature side heat exchanger 40, and the hot heat is obtained from the high temperature side heat exchanger 50.

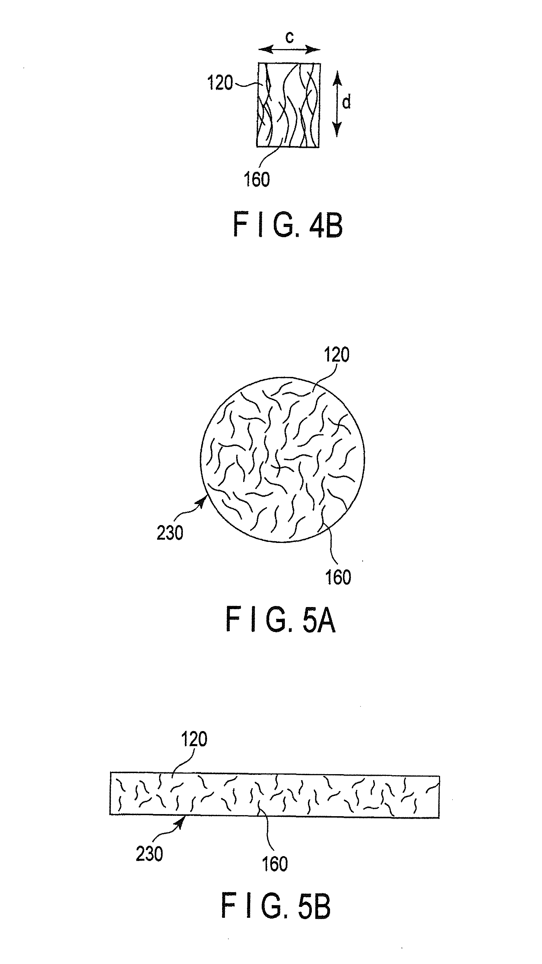

Herein, with reference to FIG. 3, the constitution of the composite material 130 for magnetic refrigeration of the present embodiment will be described. As shown in FIG. 3, in the composite material 130 for magnetic refrigeration of the present embodiment, at least one heat conductive material 160 selected from a carbon nanotube and a carbon nanofiber is dispersed in the magnetocaloric effect material 120 having a magnetocaloric effect. The structure of the composite material 130 for magnetic refrigeration of the present embodiment can be confirmed by SEM observation, for example. The composite material 130 for magnetic refrigeration shown in FIG. 3 has a particle form. However, the composite material 130 for magnetic refrigeration may have a plate form as shown in FIG. 4A. A partial enlarged view typically representing the constitution of the composite material 130 for magnetic refrigeration having a plate form is shown in FIG. 4B.

When the composite material 130 for magnetic refrigeration has the plate form as shown in FIG. 4A, a thermal conductivity in a plate thickness direction (arrow d) is preferably greater than that in a direction (arrow c) perpendicular to the plate thickness direction. As shown in the enlarged view of FIG. 4B, orientation in the plate thickness direction (arrow d) is preferably greater than that in the plate plane direction (arrow c) of the heat conductive material 160.

The form of the composite material for magnetic refrigeration of the present embodiment is not limited to the particle form and the plate form. The composite material may have any form, for example, a mesh form or the like, or may be a porous body.

For example, Gd (gadolinium) or a Gd compound can be used as the magnetocaloric effect material 120. The Gd compound is preferably a Gd alloy. For example, the Gd alloy is represented by GdR. Herein, R is at least one selected from rare earths, i.e., Sc, Y, La, Ce, Pr, Nd, Sm, Eu, Tb, Dy, Ho, Er, Tm, Yb, and Lu. Particularly, at least a part of R is preferably Y.

For example, a compound containing various rare earth elements and transition elements can be used as the magnetocaloric effect material 120. A LaFeSi-based compound having a NaZn₁₃ type crystal structure, or the like is preferably used. Specific examples of the LaFeSi-based compound include La(Fe, Si)₁₃, La(Fe, Si)₁₃ in which a part of La is substituted by a rare earth element such as Ce, Pr or Nd, La(Fe, Si)₁₃ in which a part of Fe is substituted by a transition metal such as Co, Mn, Ni or Cr, and La(Fe, Si)₁₃ in which a part of Si is substituted by Al.

The heat conductive material 160 is at least one selected from a carbon nanotube and a carbon nanofiber. The heat conductive material 160 has a higher thermal conductivity than that of the magnetocaloric effect material 120.

The amount of the heat conductive material 160 is preferably 3 to 20 vol% of the overall composite material 130 for magnetic refrigeration. When the amount of the heat conductive material is too small, the heat conductive material 160 in the magnetocaloric effect material 120 cannot sufficiently construct a heat transfer network as shown in FIG. 5A and 5B. In this case, even if the hot heat or cold heat generated in the magnetocaloric effect material 120 is transferred to the heat conductive material 160, the heat cannot be swiftly transferred to the surface of the composite material 230 for magnetic refrigeration through the network having high heat conduction by the heat conductive material 160. For this reason, an effect of an improvement in heat conduction cannot be sufficiently obtained.

Meanwhile, when the amount of the heat conductive material 160 is excessive, the magnetocaloric effect itself of the composite material is decreased, which may cause a decrease in a magnetic refrigeration performance. When the amount of the heat conductive material 160 is 3 to 20 vol% of the overall composite material for magnetic refrigeration, a desired effect intended in the present embodiment can be obtained. The amount of the heat conductive material 160 is more preferably 5 to 15 vol% of the overall composite material 130 for magnetic refrigeration.

It is preferable that the heat conductive material 160 is uniformly and more finely dispersed in the overall composite material 130 for magnetic refrigeration. For example, when the composite material 130 is made of a composite material containing a substantial amount of the heat conductive material 160 and the magnetocaloric effect material 120, and has a plate form, it is preferable that the heat conductive material 160 and the magnetocaloric effect material 120 are not present separately as large masses. For example, when the composite material 130 is plate having a thickness of approximately 1 mm, and the heat conductive material 160 and the magnetocaloric effect material 120 are present in a stripe shape at a pitch of approximately 1 mm, the stripe penetrates in the plate thickness direction.

In this case, the heat conductive material mainly serves for transporting the heat applied to one surface of the plate to the other surface. When the thermal conductivity of the heat conductive material is sufficiently high even if the thermal conductivity as the physical property value of the composite material for magnetic refrigeration is low, the capability of transferring the heat from one surface to the other surface as the overall plate is sufficiently secured. That is, in the above-mentioned case, the plate having high heat conduction in the plate thickness direction is configured. The heat conductivity as the overall composite material is high. However, this is not intended in the present embodiment.

In the present embodiment, the cold heat and hot heat generated in the composite material are intended to be efficiently transported to the surface of the material. The cold heat and the hot heat are generated in the magnetocaloric effect material which is one of the components of the composite material, and efficiently and swiftly transported by the heat conductive material which is the other component of the composite material. Therefore, it is preferable that the magnetocaloric effect material and the heat conductive material are uniformly and more finely dispersed. In order to obtain a desired effect intended in the present embodiment, the maximum spread size of the magnetocaloric effect material 120 is preferably 100 µm or less.

The maximum spread size of the magnetocaloric effect material can be determined by using the cross-sectional observation photograph (those which can distinguish between the heat conductive material and the composite material for magnetic refrigeration, such as a reflection electron image of a SEM photograph) of the material, for example. First, seven points of the magnetocaloric effect material are optionally taken, and a diameter of the maximum circle which includes the points and does not contain the heat conductive material is measured. The average value of the five points excluding the maximum value and the minimum value is determined. The maximum spread size of the magnetocaloric effect material is obtained as the average value obtained by repeating the procedure three times.

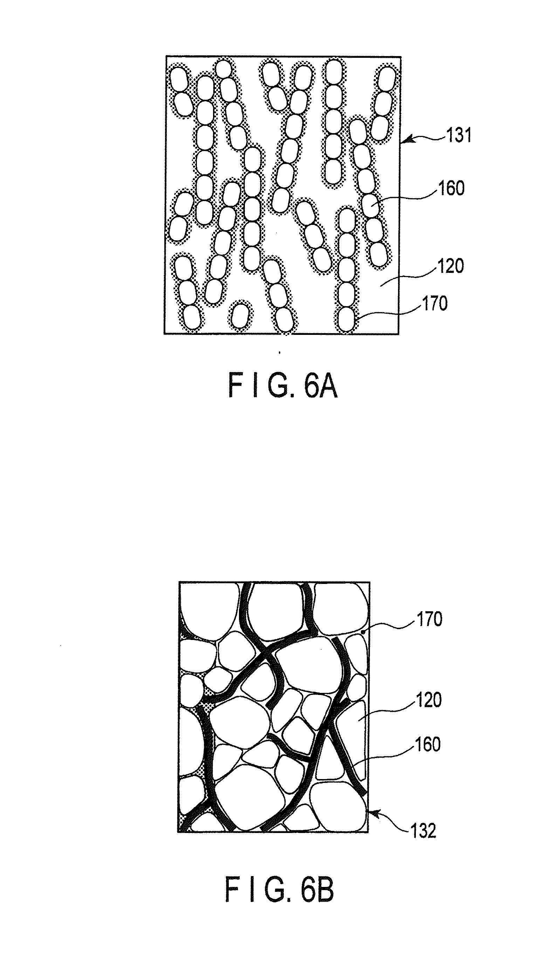

A constitution of a composite material for magnetic refrigeration according to another embodiment is shown in FIG. 6A and 6B. In a composite material 131 for magnetic refrigeration shown in FIG. 6A, a binder 170 is arranged at the boundary between a magnetocaloric effect material 120 and a heat conductive material 160. The binder 170 is a substance different from both the magnetocaloric effect material 120 and the heat conductive material 160. Furthermore, the binder 170 preferably contains at least one of elements contained in the magnetocaloric effect material 120. The structure of the composite material for magnetic refrigeration can be confirmed by, for example, SEM observation (observation evaluation of a reflection electron image and EPMA or the like).

When the binder 170 contains at least one element contained in the magnetocaloric effect material 120, the adhesion between the magnetocaloric effect material 120 and the heat conductive material 160 is enhanced. As a result, heat transfer between the magnetocaloric effect material 120 and the heat conductive material 160 is smoothly performed. For example, when the magnetocaloric effect material 120 is a Gd compound, the binder 170 contains Gd. When the magnetocaloric effect material 120 is a LaFeSi-based compound having a NaZn₁₃ type crystal structure, the binder 170 contains Si, for example.

The binder 170 enhances the adhesion between the magnetocaloric effect material 120 and the heat conductive material 160, i.e., materials having different densities to thereby enhance a mechanical strength. Furthermore, hot heat or cold heat generated in the magnetocaloric effect material 120 is smoothly heat-transferred to the heat conductive material 160 having a high thermal conductivity by enhancing the adhesion between the magnetocaloric effect material 120 and the network of the heat conductive material 160.

The binder 170 is preferably a magnetic body. In this case, when a magnetic field is applied to the composite material 130 for magnetic refrigeration from the outside, a magnetocaloric effect can be more effectively used without hindering the penetration of the magnetic field to the magnetocaloric effect material 120.

The binder 170 does not need to be necessarily present all over the boundary between the magnetocaloric effect material 120 and the heat conductive material 160. As long as the heat transfer between the magnetocaloric effect material 120 and the heat conductive material 160 is promoted, a boundary where the binder 170 is not present may be partly present.

The binder 170 may be present not only at the boundary between the magnetocaloric effect material 120 and the heat conductive material 160 but also at the grain boundary of the magnetocaloric effect material 120 as typically shown in FIG. 6B. This case can be expected to serve for enhancing the adhesion between the crystal grains of the magnetocaloric effect material 120. Therefore, the mechanical strength and heat conductivity of the composite material 132 for magnetic refrigeration are also improved.

The amount of the binder 170 is preferably 5 to 20 vol% of the overall composite material 130 for magnetic refrigeration. When the amount of the binder 170 is too small, the adhesion between the magnetocaloric effect material 120 and the heat conductive material 160 cannot be sufficiently enhanced, and thereby effects of improving the mechanical strength and of promoting the heat transfer to the network of the heat conductive material 160 having a high thermal conductivity from the magnetocaloric effect material 120 are not sufficiently obtained. Meanwhile, when the amount of the binder 170 is excessive, the adhesion between the magnetocaloric effect material 120 and the heat conductive material 160 is enhanced. However, the thickness of a binder 170 phase of the heat transfer to the network of the heat conductive material 160 having a high thermal conductivity from the magnetocaloric effect material 120 is increased. Accordingly, the rate of heat conduction in the binder 170 is controlled, which possibly hinders efficient heat transfer from the inner part of the composite material to the surface thereof.

The binder 170 preferably contains Si. When the binder 170 contains Si, an effect of enhancing the adhesion between at least one heat conductive materials 160 selected from a carbon nanotube and a carbon nanofiber and the magnetocaloric effect material 120 is further enhanced.

The composite material for magnetic refrigeration according to the present embodiment can be produced by using a mixture powder obtained by mixing raw material powders for the magnetocaloric effect material, the heat conductive material, and raw materials for an optional binder, for example. The raw material powders may be mixed by wet mixing or dry mixing by hand. However, when an ultrafine powder for the magnetocaloric effect material of submicron or less is used, the wet mixing is preferable. In the case of the wet mixing, the oxidation reaction of the surface of the raw material powder for the magnetocaloric effect material can be suppressed.

When the ultrafine powder of submicron or less is used in a dry process, a surface oxidation reaction can be avoided by performing the process in a non-oxidizing atmosphere.

When a chemical reaction is used in the case of the wet mixing, finer raw material powders for the magnetocaloric effect material can be treated as compared with the dry mixing using a pulverized powder by a mechanical force. The method can decrease the difference between the size of the raw material powder for the magnetocaloric effect material and the size of the heat conductive material, and advantageously enhances the uniformity of the mixture powder.

There is a difference also in a density between the magnetocaloric effect material and the heat conductive material. In order to further enhance the uniformity of the mixing, a dispersion auxiliary agent such as a surface-active agent is preferably added to a solution. Electrocrystallization can also be performed by using a solution containing the heat conductive material and serving as a raw material for the composite material for magnetic refrigeration. In this case, an aggregated powder having a particle diameter of several to several tens of microns is obtained by the aggregation of powders in which the heat conductive material and the magnetocaloric effect material are ultrafinely mixed with each other. The aggregated powder is washed and dried, and thereby the mixture powder in which the heat conductive material and the magnetocaloric effect material are finely dispersed can be obtained.

It is also advantageous that the mixture is obtained in the form of a putty-like green body by the wet mixing. The putty-like green body is obtained by mixing the raw material powders for the composite material for magnetic refrigeration such as the magnetocaloric effect material and the heat conductive material with an organic substance and an organic solvent. Examples of the organic substance include a polyvinyl-based compound. The organic solvent can be selected from ethanol and acetone or the like, for example. Usually, in the heat conductive material selected from the carbon nanotube and the carbon nanofiber, the CNT and CNF raw materials aggregate. The heat conductive material and the magnetocaloric effect material can be finely and sufficiently mixed by loosening the aggregation of the CNT and CNF raw materials.

A technique of performing kneading sufficiently in the state of the putty-like green body is particularly effective in loosening the aggregation of the CNT and CNF raw materials. In this method, in addition to the magnetocaloric effect material and the heat conductive material, the organic substance and the organic solvent are present in the mixture. Since the organic solvent such as ethanol or acetone is volatilized and evaporated, impurities do not remain in the final composite material for magnetic refrigeration. Meanwhile, the organic substance such as the polyvinyl-based compound remains in the green body in the state of the green body. The organic substance is combusted in sintering in a post-process, and thereby the organic substance can be discharged to the outside of a sintered body as a gas. The impurities in the composite material for magnetic refrigeration as the last form can be suppressed low by adjusting the kind of the organic substance and the condition of the sintering.

Thus, the sintered body is produced by using the mixture powder or green body obtained by the wet mixing or the dry mixing. The sintered body can be produced by accommodating the mixture powder or the green body in a predetermined mold, and subjecting the mixture powder or the green body to Spark Plasma Sintering, for example. Specifically, the Spark Plasma Sintering is performed by applying a voltage while increasing a temperature under an Ar atmosphere. The sintered body is cut in a predetermined size if needed to thereby obtain the composite material for magnetic refrigeration of the present embodiment.

The dry mixing is disadvantageous in that the uniformity is enhanced when the difference between the sizes of the powders of the raw materials is large, as compared with the wet mixing. However, the dry mixing is advantageous in that the contamination with the impurities can be suppressed. Meanwhile, the electrocrystallization method in the wet mixing can decrease the difference between the sizes of the powders of the raw materials. In addition, in this case, the use of the surfactant can enhance the uniformity as compared with the dry mixing. However, traces of impurities are not avoided. A method for performing kneading sufficiently in the state of the putty-like green body is particularly effective in loosening the aggregation of the CNT and CNF raw materials. A suitable mixing method may be employed for any purpose.

Examples of the powder of the magnetocaloric effect material include a Gd fine powder, and a fine powder of a GdR alloy such as a GdY alloy. The fine powder containing Gd can be produced by, for example, a plasma spray method. The particle diameter is preferably about 200 µm or less. More preferably, the particle diameter is about 100 µm or less.

Another examples of the raw material powders for the magnetocaloric effect material include a compound powder such as a LaFeSi compound, a FeSi compound, a LaSi compound, a LaCoSi compound, a LaCo compound, or a CoSi compound, and a fine powder such as Fe, Co, or a FeCo alloy. The fine powder can be produced by grinding in a non-oxidizing atmosphere an ingot of an intermetallic compound produced by, for example, a solution method, or by the plasma spray method as described above, or the like. The particle diameter of the powder is preferably about 100 µm or less, and more preferably about 50 µm or less.

The magnetocaloric effect material is not limited to Gd, the Gd alloy, and the LaFeSi-based compounds, and the raw material powders also are not limited to the above-mentioned raw material powders.

The heat conductive material is preferably a multiwall carbon nanotube (MWCNT) or a carbon nanofiber. The heat conductive material preferably has a fiber diameter of about 5 to 200 nm and a fiber length of about 0.5 to 50 µm. For example, a vapor grown carbon fiber can be used. Examples thereof include VGCF (registered trademark) manufactured by Showa Denko K. K., and NT-7 and CT-15 (registered trademark) manufactured by Hodogaya Chemical Co., Ltd. The heat conductive material preferably has a high graphite ratio. It is preferable that a D/G ratio evaluated by a Raman spectrophotometer is 0.15 or less.

When the magnetocaloric effect material is Gd or the Gd alloy, for example, a Gd₅Si₄ compound powder, a FeSi compound powder, and a Si powder or the like can be used as raw materials added in order to generate a binder.

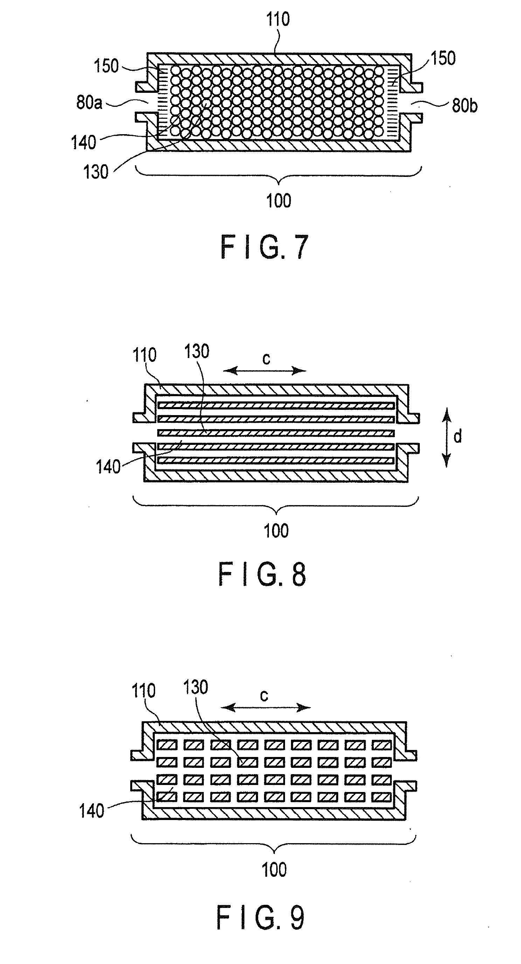

FIG. 7 shows a typical cross-sectional view showing a structure as an example of an AMR bed 100 in a magnetic refrigeration device 200 shown in FIG. 1. In the AMR bed 100 in FIG. 7, a container 110 having ports 80a and 80b of a heat transport fluid 140 at both ends is filled with a composite material 130 for magnetic refrigeration having a spherical particle form.

A partition 150 is arranged inside the ports 80a and 80b so that the composite material 130 for magnetic refrigeration in the container 110 does not leak out of the container through the ports 80a and 80b. For example, a mesh-like plate can be used as the partition 150. The material thereof is not particularly limited. The opening of the mesh is preferably larger in a range in which particles of the composite material 130 for magnetic refrigeration do not leak so that a pressure loss caused by the flow of the heat transport fluid 140 is not increased.

Voids of the composite material 130 for magnetic refrigeration with which the AMR bed 100 is filled and ranges outside the partitions 150 provided in the vicinity of the ports provided at both the ends the container are filled with the heat transport fluid 140.

A range sandwiched between the partitions 150 is filled with the composite material 130 for magnetic refrigeration having a spherical particle form. The composite material for magnetic refrigeration used herein may be one composite material for magnetic refrigeration, or may contain two or more composite materials for magnetic refrigeration having different optimal working temperature regions. When a plurality kinds of the composite materials having particle forms and having different optimal working temperature regions are used, and when the container is filled with such composite materials, the above-mentioned partition is preferably provided between the different composite materials. This can prevent the different composite materials from being mixed.

A typical cross-sectional view showing a structure as another example of an AMR bed 100 is shown in FIG. 8 to 10. In the AMR bed 100 shown in FIG. 8, a composite material 130 for magnetic refrigeration having a plate form is arranged in a container 110 in a state where the flow passage of a heat transport fluid 140 is secured. The composite material 130 for magnetic refrigeration having a plate form may be one composite material for magnetic refrigeration, or may contain two or more composite materials for magnetic refrigeration having different optimal working temperature regions. The voids of the plate composite material 130 for magnetic refrigeration arranged in the AMR bed 100 and the outside of the AMR bed are filled with the heat transport fluid 140.

In the AMR bed 100, a temperature gradient is formed in a heat flow direction represented by an arrow c. In order to promote heat exchange between the composite material 130 for magnetic refrigeration and the heat transport fluid 140, the composite material 130 for magnetic refrigeration preferably has a high heat conductivity in a plate thickness direction (arrow d). Meanwhile, when the composite material 130 for magnetic refrigeration has a large heat conductivity in a heat flow direction (arrow c) perpendicular to the plate thickness direction, it is disadvantageous to form the temperature gradient. For this reason, when the composite material 130 for magnetic refrigeration has a plate-like form, the composite material 130 for magnetic refrigeration preferably has anisotropic heat conductivity.

Specifically, when the composite material 130 for magnetic refrigeration has a plate form, the heat conductivity in the plate thickness direction (arrow d) is preferably greater than that in the direction (arrow d) perpendicular to the plate thickness direction. This can be attained by setting the orientation of a heat conductive material 160 in the plate thickness direction (arrow d) to be greater than that in the direction (arrow c) perpendicular to the plate thickness direction, as described with reference to FIG. 4B.

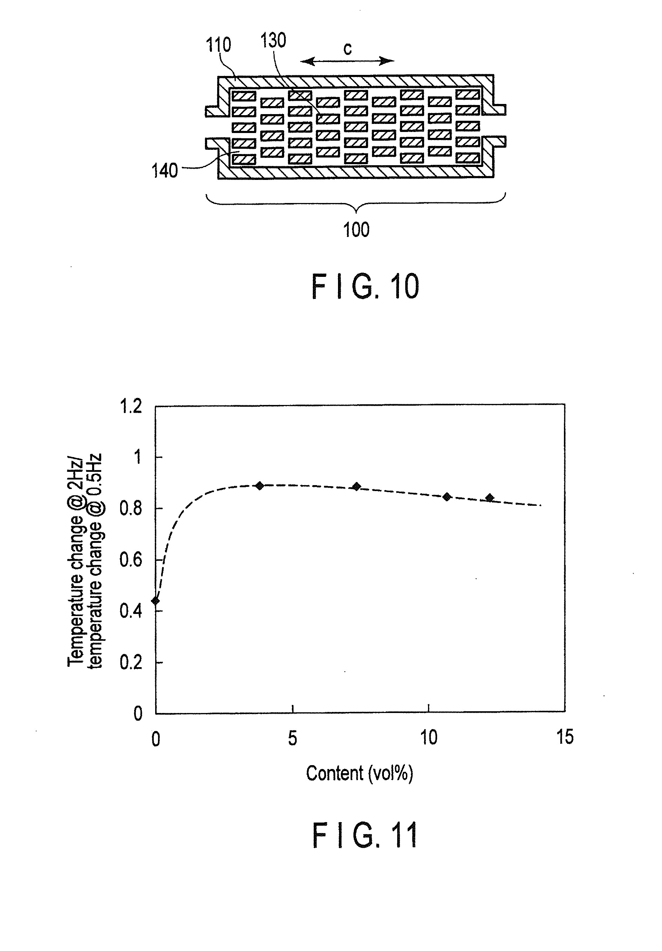

In the AMR bed 100 shown in FIG. 9 and the AMR bed 100 shown in FIG. 10, the composite material 130 for magnetic refrigeration having a rectangle-shaped form is arranged in the container 110 in a state where the flow passage of a heat transport fluid 140 is secured. The composite material 130 for magnetic refrigeration having a rectangle-shaped form may be one composite material for magnetic refrigeration, and may contain two or more kind of composite materials for magnetic refrigeration having different optimal working temperature regions. The voids of the rectangle-shaped composite material 130 for magnetic refrigeration arranged in the AMR bed 100 and the outside of the AMR bed are filled with the heat transport fluid 140.

When the composite material for magnetic refrigeration has the rectangle-shaped form as shown in FIG. 9 and 10, the heat conduction in the heat flow direction (arrow c) in the AMR bed 100 is suppressed as compared with the case where the composite material for magnetic refrigeration having a plate form shown in FIG. 8 is used. The suppression of the heat conduction in the heat flow direction (arrow c) advantageously produces the temperature gradient. A pressure loss when the composite material 130 for magnetic refrigeration having a rectangle-shaped form is arranged in a square grid shape as shown in FIG. 9 can be suppressed low as compared with the case where the composite material 130 for magnetic refrigeration is arranged in a staggered pattern form as shown in FIG. 10.

Meanwhile, a pressure loss when the composite material for magnetic refrigeration is arranged in the staggered pattern form as shown in FIG. 10 is increased as compared with the case where the composite material for magnetic refrigeration is arranged in the square grid shape as shown in FIG. 9. However, a turbulent flow is likely to be generated in the flow of the heat transport fluid 140. As a result, the heat exchange efficiency between the composite material for magnetic refrigeration and heat transport fluid can be enhanced. When the plurality of composite materials for magnetic refrigeration having different optimal working temperature regions are arranged, it is preferable that the composite materials for magnetic refrigeration are sequentially arranged in the heat flow direction (arrow c).

In the composite material for magnetic refrigeration of at least one embodiment described above, at least one heat conductive material selected from the carbon nanotube and the carbon nanofiber is dispersed in the magnetocaloric effect material, and thereby the composite material for magnetic refrigeration can have high heat conductivity and a practicable magnetocaloric effect.

The composite material for magnetic refrigeration of the present embodiment contains at least one heat conductive material selected from the carbon nanotube (CNT) and the carbon nanofiber (CNF). The content of the heat conductive material in the composite material for magnetic refrigeration can be determined by elemental analysis using a solution process and a combustion method. For example, after the total mass (M₀) of a fragment of a composite material is measured, the fragment is dissolved in a suitable acid. A content mass (M₁) of a constituent element excluding C is determined by wet analysis. A mass (M_{C}) of C is determined by (M₀-M₁). When a value of a true density of C is used, a reference value of a content (vol%) of C is obtained by converting the mass into a volume. The content of C corresponds to the reference value of the content (vol%) of CNT and/or CNF in the composite material for magnetic refrigeration.

ICP or the like are generally used as the wet analysis. The content of C when the solution process is used can be determined with higher accuracy than that when the combustion method is used.

As described above, the binder is a substance different from the magnetocaloric effect material and the heat conductive material. It is Preferable that the binder contains at least one element constituting the magnetocaloric effect material. The specification of the phase region and the identification of the content element regarding the binder can be performed according to the methods such as the reflection electron image of SEM, and EPMA, in the cross-sectional texture observation of the composite material. The content of the binder is determined by a method for calculating from area ratios in a plurality of cross-sectional observation photographs. The content of the binder can be determined by averaging area ratios in at least three cross-sectional observation photographs.

### Examples

Hereinafter, a specific example of a composite material for magnetic refrigeration will be shown.

A pellet was produced according to a Spark Plasma Sintering method using a mixture powder of a Gd fine powder as a magnetocaloric effect material and a carbon nanofiber (CNF) as a heat conductive material, as raw materials. A powder having a particle diameter of several tens of microns (200 mesh) was used as the Gd fine powder. VGCF (registered trademark) (a fiber diameter of about 150 nm and a fiber length of about 10 to 20 µm) manufactured by Showa Denko K. K. was used as the CNF.

The CNF was weighed so that the amount thereof was 3.5% by mass based on the Gd fine powder. The CNF and the Gd powder were wet-mixed in a polyvinyl alcohol solution containing a surfactant, followed by drying to thereby obtain an aggregated mixture powder (raw material mixture powder of Example 1). Raw material mixture powders of Examples 2 to 4 were obtained according to the same technique except that the amounts of the CNF were changed to 1% by mass, 2% by mass, or 3% by mass based the Gd fine powder.

A hollow mold was filled with each of the mixture powders. Each of the mixture powders was subjected to Spark Plasma Sintering to produce a sintered body. Specifically, a voltage was applied to be a temperature of 700 to 850°C while a pressure was applied at a pressure of 40 MPa at a degree of vacuum of about 10 Pa. As a result, disk form samples of Examples 1 to 4 were obtained. When both the surfaces of each of the samples were polished, all the samples presented a metallic luster.

When the true density of the CNF in the sintered body is assumed to be 2 to 1.8 g/cm³, the contents of the CNF in the samples of Examples 1 to 4 are converted as follows. The content of the CNF herein is a ratio of the CNF to the total amount of the sintered body (composite material for magnetic refrigeration).
Example 1: about 12.3 to 13.5 vol%
Example 2: about 3.8 to 4.0 vol%
Example 3: about 7.4 to 8.2 vol%
Example 4: about 10.7 to 11.8 vol%

Also when a fine powder of a GdY alloy (Y concentration: 1.5 atom %) was used instead of the Gd fine powder, a disk form sample was obtained according to the same technique.

As a result of SEM-observing the samples of Examples, the CNF as the heat conductive material was confirmed to be dispersed in Gd as the magnetocaloric effect material in all the samples.

Furthermore, a sintered body sample of Comparative Example was obtained according to the same technique as described above except that only the Gd fine powder was used as the raw material without blending the CNF.

The samples of Examples 1 to 4 and Comparative Example were processed into coarse particles having a particle diameter of about 0.7 to 1.2 mm.

A magnetic field was applied/removed to/from the obtained coarse particles to measure a temperature change. Specifically, about 2 g of the coarse particles of each of the samples were weighed. A plastic container was filled with the coarse particles, and covered with a lid. In order to measure an internal temperature, a thermocouple was inserted into the central part of the coarse particles of the filled composite material for magnetic refrigeration through a hole formed in a bottom face of a container. A procedure of applying/removing the magnetic field to the composite material for magnetic refrigeration in the container was repeated by arranging a C type permanent magnet outside the container, and moving the permanent magnet. The cycle frequency of the application/removal of the magnetic field was set to 0.5 Hz and 2 Hz. In each of the cases, a change in a temperature was measured by using the thermocouple inserted into the central part of the container.

The evaluation results of Examples and Comparative Example are shown in the following Table 1. The lower limit of the content (vol%) of the converted CNF is shown as "CNF content" in the following Table 1. Ratios of (temperature difference at 2 Hz)/(temperature difference at 0.5 Hz) were calculated from the evaluation results, and plotted in FIG. 11.

**[Table 1]**

| | | Example 1 | Example 2 | Example 3 | Example 4 | Comparative Example |
|---|---|---|---|---|---|---|
| temperature change (°C) | 0.5Hz | 2.4 | 2.6 | 2.5 | 2.5 | 2.5 |
| | 2Hz | 2.0 | 2.3 | 2.2 | 2.1 | 1.1 |
| temperature change(2Hz)/ temperature change(0.5Hz) | | 0.83 | 0.88 | 0.88 | 0.84 | 0.44 |
| CNF content (vol%) | | 12.3 | 3.8 | 7.4 | 10.7 | 0 |

As shown in the above Table 1, when the cycle frequency is 0.5 Hz, the temperature change is 2.5 ± 0.1°C also in both Example and Comparative example. Even in the case of Comparative Example excluding the CNF and containing only the Gd fine powder, a temperature change comparable to that of Example containing the CNF is caused.

However, when the frequency is 2 Hz, the temperature change of Comparative Example is largely decreased to 1.1°C. The decreasing rate at this time (temperature change at 2 Hz/temperature change at 0.5 Hz) is 0.44. The magnitude of the temperature change to be observed was decreased to be equal to or less than half by increasing the cycle of the application/removal of the magnetic field.

Next, the same sample as that in the above-mentioned Comparative Example was prepared except that the particle diameter was set to about 0.3 to 0.5 mm. The same experiment as the above-mentioned experiment was conducted for the sample. The decreasing rate in this case was 0.68. The decreasing rate was confirmed to largely depend on a coarse particle size. It is considered that when the cycle frequency of the application/removal of the magnetic field is increased, the temperature change generated in the sample within a prescribed time is not sufficiently transferred to the surfaces, which provide a decrease in the temperature change. Meanwhile, it was showed that the decreasing rate was 0.8 or more in Examples, and the decrease in the temperature change when the frequency was increased was suppressed by containing the CNF. This situation is shown in FIG. 11.

The raw material adjusted so that the amount of the CNF was set to 6.5% by mass based on the Gd fine powder was subjected to Spark Plasma Sintering according to the same technique as that in Example 1. However, when the sintered body was taken out from the mold, the sintered body was broken into pieces. When the content of the CNF in the sintered body which should have been obtained herein is calculated by using the above-mentioned true density (2 to 1.8 g/cm³), the content is about 20.6 to 22.4 vol%. The amount of the CNF exceeding 20 vol% was found to make it difficult to form a complex (sintered body).

Next, in addition to the Gd fine powder as the magnetocaloric effect material and the CNF as the heat conductive material, a Gd₅Si₄ compound powder as a binder was blended in a small amount, and a disk form sample was produced by the same Spark Plasma Sintering method as described above (Example 5). The amount of the CNF was set to about 4% by mass based on the Gd fine powder, and the amount of a Gd₅Si₄ compound fine powder was set to 2% by mass based on the Gd fine powder.

From the SEM observation of the sample, the CNF was confirmed to be dispersed in Gd. The amount of the CNF was about 12 vol% of the overall sintered body. A compound being different from both Gd and the CNF and containing Si was formed as a boundary phase at the boundary between Gd and the CNF. The amount of the boundary phase was about 6 vol% of the overall sintered body. The sample of Example 5 thus obtained was processed into coarse particles of about 0.7 to 1.2 mm.

The temperature change was evaluated according to the same technique as described above except that the sample of Example 5 was used. As a result, the temperature change when the frequency was 0.5 Hz was 2.7°C, and the temperature change when the frequency was 2 Hz was 2.4°C. The decreasing rate (ratio of temperature change at 2 Hz/temperature change at 0.5 Hz) of the temperature change when the frequency was increased was 0.88. From this result, it is estimated that the adhesion of the boundary part between Gd and the CNF is enhanced by adding the binder, which suppresses the decrease in the temperature change on the surface caused by increasing the frequency.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A composite material for magnetic refrigeration comprising:
a magnetocaloric effect material having a magnetocaloric effect; and
a heat conductive material dispersed in the magnetocaloric effect material, wherein the heat conductive material is at least one selected from the group consisting of a carbon nanotube and a carbon nanofiber.

2. The composite material for magnetic refrigeration according to claim 1, further comprising a binder at the boundary between the magnetocaloric effect material and the heat conductive material, wherein the binder is different from the magnetocaloric effect material and the heat conductive material, and comprises at least an element which constitutes the magnetocaloric effect material.

3. The composite material for magnetic refrigeration according to claim 1 or 2, wherein the binder is a magnetic material.

4. The composite material for magnetic refrigeration according to any one of claims 1 to 3, wherein the heat conductive material accounts for 3 to 20 vol% of the overall composite material for magnetic refrigeration.

5. The composite material for magnetic refrigeration according to claim 4, wherein the heat conductive material accounts for 5 to 15 vol% of the overall composite material for magnetic refrigeration.

6. The composite material for magnetic refrigeration according to any one of claims 1 to 5, wherein the magnetocaloric effect material is Gd or a compound thereof.

7. The composite material for magnetic refrigeration according to any one of claims 1 to 5, wherein the magnetocaloric effect material is a LaFeSi-based compound having a NaZn₁₃ type crystal structure.

8. The composite material for magnetic refrigeration according to any one of claims 2 to 7, wherein the binder comprises Si.

9. The composite material for magnetic refrigeration according to any one of claims 1 to 8, wherein the composite material for magnetic refrigeration has a plate form, and has a heat conductivity in a plate thickness direction greater than that in a direction perpendicular to the plate thickness direction.

10. A magnetic refrigeration device comprising:
a composite material for magnetic refrigeration according to any one of claims 1 to 9;
a mechanism configured to apply/remove a magnetic field to/from the composite material for magnetic refrigeration; and
a unit configured to transport heat.
